# FASCICULE DE BREVET EUROPEEN

(11) **EP 2 613 928 B1**
(45) Date de publication et mention de la délivrance du brevet: **06.04.2016**
(21) Numéro de dépôt: 11773484.8
(22) Date de dépôt: 05.09.2011
(51) Int. Cl.: B29D 30/16, B29D 30/30, B29C 43/24, B29C 47/32, B29C 47/52

(54) **PROCEDE ET INSTALLATION DE FABRICATION D'UNE EBAUCHE DE PNEUMATIQUE AU MOYEN D'UNE BANDELETTE**
VERFAHREN UND VORRICHTUNG ZUR HERSTELLUNG EINES REIFENROHLINGS MITTELS EINES STREIFENS
PROCESS AND DEVICE FOR BUILDING A GREEN PNEUMATIC TIRE BY MEANS OF A STRIP

(30) Priorité: 10.09.2010 FR 1057222
(43) Date de publication de la demande: 17.07.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: FOUGERAS, Magaly, F-63040 Clermont-Ferrand Cedex 9 (FR); GATIEN, Stéphane, F-63043 Clermont-Ferrand Cedex 9 (FR); MONNEREAU, Patrice, F-63040 Clermont-Ferrand Cedex 9 (FR)
(74) Mandataire: Noel, Luminita
(86) Numéro de dépôt international: PCT/FR2011/052024
(87) Numéro de publication internationale: WO 2012/032253

(56) Documents cités:
- EP-A1- 1 754 592
- EP-A1- 1 818 165
- EP-A1- 2 055 460
- WO-A1-2007/000443
- WO-A1-2009/130727
- WO-A1-2009/131578
- WO-A1-2010/055913

## Description

L'invention concerne la fabrication des ébauches crues de pneumatique au moyen de bandelettes.

Il est connu de fabriquer une ébauche de pneumatique en enroulant sur un tambour une bandelette formant de très nombreux tours. En positionnant convenablement la bandelette au cours de l'enroulement, on donne une forme et des dimensions particulières au profil de l'ébauche. Il est connu notamment de constituer la plus grande partie de la bande de roulement de l'ébauche au moyen de bandelettes présentant une superficie de section relativement grande, puis de définir la forme extérieure de l'ébauche avec un autre type de bandelette présentant une superficie de section plus petite, et donc une épaisseur réduite permettant de donner une forme plus détaillée à la face externe de l'ébauche.

Chaque bandelette est fabriquée par extrusion, puis immédiatement enroulée pour former l'ébauche. Le changement de type de bandelette requiert donc une intervention interrompant la fabrication, par exemple un nouveau réglage de l'extrudeuse. De même, lorsqu'on veut fabriquer une ébauche pour un pneumatique d'un type différent requérant une bandelette dont la section présente des caractéristiques différentes, il est nécessaire de modifier le réglage de l'extrudeuse. Ces interventions ralentissent la fabrication d'une même ébauche ou d'une série d'ébauches correspondant à des modèles différents.

Le document WO 2010/055913A1 divulgue une installation conforme au préambule de la revendication 9.

Un but de l'invention est d'accélérer la fabrication des ébauches par cette technique.

A cet effet, on prévoit selon l'invention un procédé de fabrication d'une ébauche crue de pneumatique de véhicule, dans lequel on extrude une bandelette de gomme et on la fait passer entre deux organes dont l'un forme un rouleau d'extrusion de la bandelette de sorte que des faces de la bandelette, formant une même section de la bandelette dans un plan perpendiculaire à une direction de défilement de la bandelette et en appui simultané contre les organes respectifs, sont entrainées à des vitesses linéaires différentes l'une de l'autre, et que les organes étirent la bandelette entre eux.

Ainsi, on réalise un étirement au sein d'une même section transversale de la bandelette. Cet étirement entraîne une modification de sa superficie de section transversale, et en particulier de son épaisseur. On peut donc facilement choisir la superficie de la section de la bandelette en modulant l'étirement. Ce choix peut être effectué sans intervenir sur l'alimentation de la bandelette en amont, par exemple par extrusion. On peut donc à tout moment modifier les caractéristiques de la bandelette qui sert à former l'ébauche.

Cette modification peut intervenir en cours d'enroulement afin de faire varier l'épaisseur de la bandelette qui sert à constituer l'ébauche. On peut ainsi fabriquer une partie de l'ébauche avec des tours de bandelette présentant une première superficie de section transversale, puis une autre partie de l'ébauche avec des tours de bandelette présentant une autre superficie de section transversale.

Lorsqu'il s'agit de fabriquer successivement des ébauches de types différents, on peut très rapidement, en modifiant l'étirement appliqué sur la bandelette, changer les caractéristiques dimensionnelles de cette dernière.

Dans tous les cas, la fabrication des ébauches s'en trouve accélérée et ce sans transiger toutefois sur le respect de leurs caractéristiques dimensionnelles.

De préférence, les faces sont entrainées aux vitesses différentes dans une même section de la bandelette dans un plan perpendiculaire à la direction de défilement.

On réalise ainsi un cisaillement de la bandelette.

De préférence, pendant le passage entre les organes, on enroule la bandelette pour former l'ébauche.

On prévoit en général que, durant tout l'enroulement de la bandelette, elle présente au moment de son enroulement sur l'ébauche une section radiale à l'axe de l'ébauche dont la largeur parallèlement à cet axe est inférieure au quart de la largeur de l'ébauche.

De préférence encore, on effectue un trancanage.

Ainsi ce coulissement du support d'enroulement par rapport aux organes suivant une direction parallèle à l'axe d'enroulement permet de modifier la position de la fibre moyenne de la bandelette sur l'ébauche au cours de la réalisation de cette dernière. Il permet de placer la bandelette à différents endroits du profil de l'ébauche au fur et à mesure de la fabrication. On peut ainsi faire en sorte que les sections de la bandelette situées dans le même plan radial sont le plus souvent en recouvrement partiel. Dans la plupart des cas, la section n'est pas disposée dans une configuration plane et les sections ne sont pas empilées suivant la direction radiale à l'axe. Certaines sont empilées latéralement.

Avantageusement, au moins l'un des organes forme un support d'enroulement.

Ainsi, on réduit les dimensions de l'installation mettant en oeuvre le procédé et on accélère la réalisation de l'ébauche, la bandelette passant sur un nombre réduit d'organes.

Avantageusement, la bandelette passant de l'un à l'autre des organes, une vitesse linéaire de la bandelette sur l'organe amont est inférieure à une vitesse linéaire de la bandelette sur l'organe aval.

Avantageusement, les vitesses linéaires présentent une différence constante pendant une durée non nulle.

De préférence, une vitesse linéaire de la bandelette sur l'un des deux organes, par exemple l'organe amont lorsque la bandelette passe de l'un à l'autre des organes, est constante pendant une durée non nulle, par exemple pendant une durée totale de fourniture de la bandelette pour la fabrication de l'ébauche.

On peut donc effectuer par exemple l'alimentation de la bandelette, notamment son extrusion, à vitesse constante.

Avantageusement, on fait varier une vitesse de rotation de l'un des deux organes, par exemple l'organe aval lorsque la bandelette passe de l'un à l'autre des organes, pendant une durée non nulle.

La bandelette forme par exemple une bande de roulement de l'ébauche.

On prévoit également selon l'invention un procédé de fabrication d'un pneumatique de véhicule, qui met en oeuvre un procédé selon l'invention.

On prévoit aussi selon l'invention une installation de fabrication d'une ébauche crue de pneumatique de véhicule, qui comprend :
- deux organes mobiles entre lesquels l'installation est apte à faire passer une bandelette de gomme, l'un des organes formant un rouleau d'extrusion de la bandelette, et
- des moyens automatisés aptes à commander les deux organes de sorte que, lors du passage, des faces de la bandelette, formant une même section de la bandelette dans un plan perpendiculaire à une direction de défilement de la bandelette et en appui simultané contre les organes respectifs, sont entrainées à des vitesses linéaires différentes l'une de l'autre et que les organes étirent la bandelette entre eux.

On peut prévoir que les organes sont dépourvus de moyens de chauffage.

En effet, l'invention peut être mise en oeuvre sans que les organes réalisent un chauffage de la bandelette.

On peut prévoir que l'installation comprend un support d'enroulement de l'ébauche monté coulissant, suivant une direction parallèle à l'axe d'enroulement, sur un bâti de l'installation par rapport auquel l'organe d'alimentation est fixe dans son ensemble. On peut prévoir au contraire que le support est monté fixe à coulissement sur le bâti, l'organe d'alimentation étant monté coulissant par rapport à ce dernier.

On prévoit enfin selon l'invention une ébauche crue de pneumatique de véhicule, qui comprend une bandelette de gomme ininterrompue, à un seul brin, enroulée sur plusieurs tours et présentant une section, dans un plan radial à un axe principal de l'ébauche, ayant une superficie non constante le long de la bandelette et telle que, dans au moins deux sections de la bandelette s'étendant dans un même plan radial de l'ébauche et situées à la suite l'une de l'autre le long de la bandelette, une fibre moyenne de la bandelette occupe des positions respectives différentes le long de l'axe.

La bandelette présentant ici un seul brin, elle ne comprend pas de zone dans laquelle la bandelette est fournie pour l'enroulement sous la forme de deux brins ou plus enroulés en même temps. On pourra donc se dispenser de prévoir des moyens de découpe longitudinale de la bandelette avant son enroulement sur l'ébauche. Ainsi, c'est l'intégralité de la gomme fournie lors de la fabrication et de l'alimentation de la bandelette qui est enroulée sur l'ébauche, en un seul brin.

Le déplacement de la fibre moyenne de la bandelette résulte du trancanage opéré pendant l'enroulement, à savoir du coulissement des organes par rapport au support d'enroulement, suivant une direction parallèle à l'axe d'enroulement, pour modifier la position générale de la bandelette dans l'ébauche.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue de principe d'une installation de mise en oeuvre du procédé de l'invention ;
- la figure 2 est une vue plus détaillée de l'installation de la figure 1 ;
- la figure 3 est une vue du nez à rouleau de l'installation de la figure 2 ;
- la figure 4 est une vue à plus grande échelle du détail D de la figure 3
- la figure 5 est une vue partielle en section d'une ébauche de pneumatique fabriquée au moyen de l'installation des figures précédentes ; et
- la figure 6 est une vue d'une section d'une bandelette utilisée en variante dans l'installation de la figure 1.

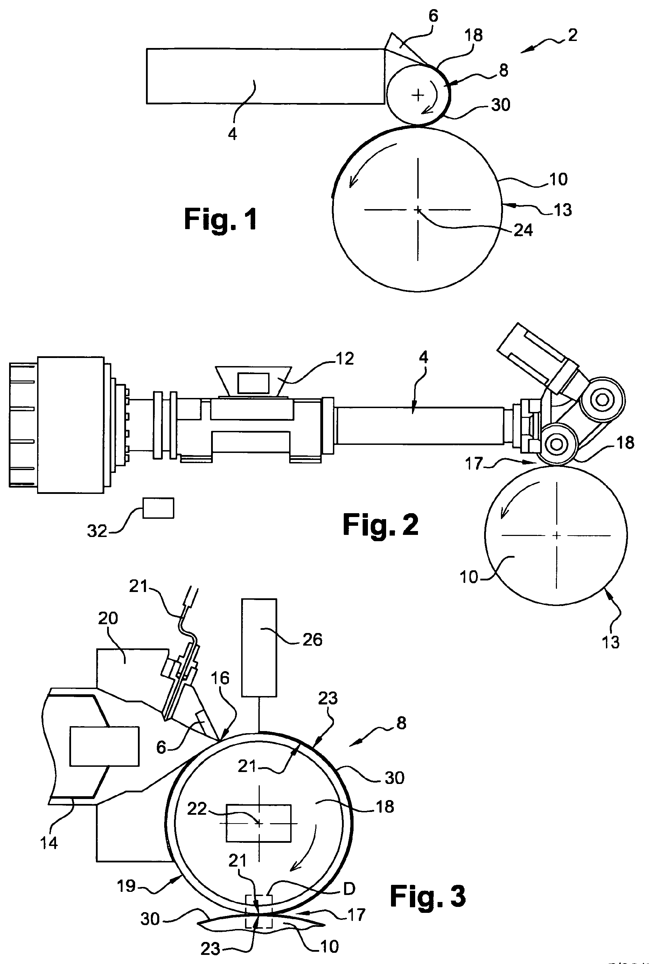

On a illustré aux figures 1 à 4 une installation 2 selon l'invention servant à la fabrication d'ébauches crues de pneumatique. Il pourra s'agir de pneumatiques pour des roues de véhicules de tourisme, de véhicules utilitaires, de véhicules de type poids lourds ou deux roues, ou encore pour des engins de génie civil.

On prévoit de préférence que l'installation est globalement conforme, mis à part certains aspects décrits ci-après, à celle qui est décrite dans la demande FR-2 914 581 au nom de la demanderesse et à laquelle on pourra se référer pour plus de détails.

Le procédé qui va être décrit ci-après sert à la fabrication de la bande de roulement de l'ébauche mais l'invention n'est pas restreinte à la fabrication de cette partie de l'ébauche et peut servir pour réaliser un ou deux flancs de l'ébauche.

L'installation 2 comprend une extrudeuse 4, une lame d'extrusion 6, un nez à rouleau 8 et une forme ou tambour 10 destiné à supporter l'ébauche 34 au cours de sa fabrication.

L'extrudeuse 4 comporte des moyens 12 de réception d'un mélange formant de la gomme et comprenant notamment du caoutchouc et un élastomère. Elle comprend une vis d'extrusion 14 forçant ce mélange à travers un orifice d'extrusion 16 formé entre la lame d'extrusion 6 et un rouleau 18 du nez 8. La lame 6 est supportée par une pièce 20 formant une voûte du nez à rouleau et guidant la gomme jusqu'à l'orifice 16 d'où sort une bandelette de gomme 30 formant un ruban. Le rouleau 18 est monté mobile à rotation autour d'un axe horizontal 22 parallèle à un axe de rotation 24 du tambour 10. Le nez 8 comprend en l'espèce un organe 26 de mesure de l'épaisseur du ruban formé par la bandelette de gomme 30 extrudée à travers l'orifice 16. Cet organe permet donc de contrôler la conformité de cette épaisseur mesurée suivant une direction radiale à l'axe 22. La pièce 20 porte un organe 21 de mesure de la température de la voûte pour le contrôle du processus d'extrusion.

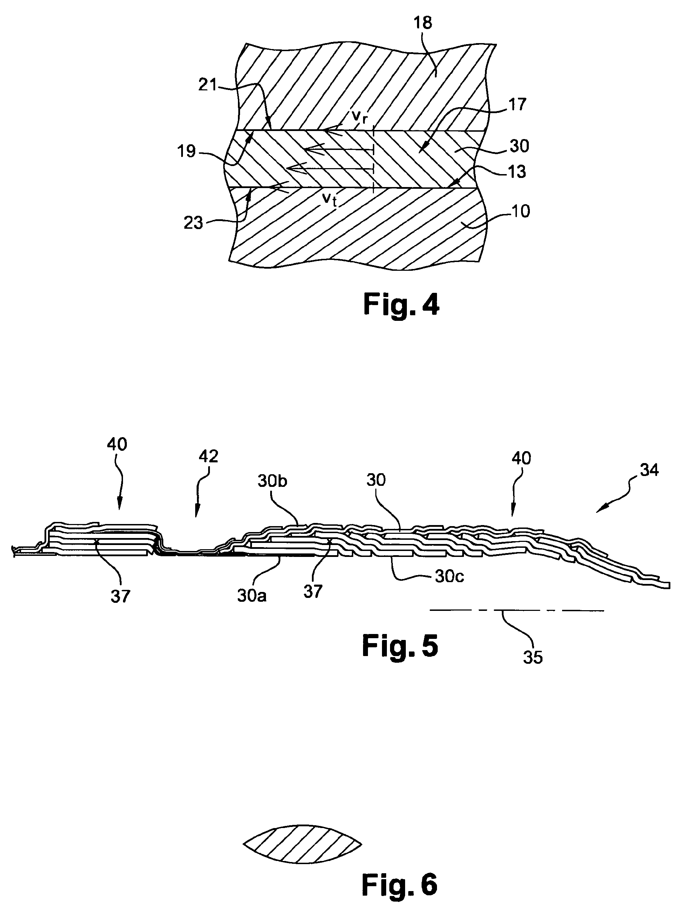

La bandelette 30 a été notamment illustrée à la figure 5 sur l'ébauche achevée 34 qui illustre aussi l'axe principal 35 de l'ébauche. L'ébauche a une forme générale torique d'axe 35. La bandelette 30 présente en l'espèce une section, dans un plan perpendiculaire à sa direction de déplacement, de forme rectangulaire. On pourrait toutefois choisir de fabriquer la bandelette 30 en lui donnant une autre forme de section, par exemple la forme lenticulaire illustrée à la figure 6.

Le tambour 10 est associé à des moyens de motorisation à vitesse variable non illustrés servant à le mettre en rotation autour de son axe 24. L'installation 2 comprend des moyens de commande 32 aptes à commander l'extrudeuse 4, notamment la vitesse de rotation du rouleau 18, et le tambour 10. Ces moyens comprennent des organes informatiques tels que processeur, mémoire, et horloge leur permettant de commander tout ou partie des étapes du procédé qui va être présenté ci-après. Cette commande est effectuée au moyen d'un programme enregistré sur un support d'enregistrement de données comprenant des instructions de code aptes, lorsqu'elles sont exécutées, à commander la mise en oeuvre de ces étapes.

Le tambour 10 est positionné en l'espèce de sorte que sa face périphérique 13 de forme cylindrique s'étend en regard de la face périphérique 19 du rouleau. A tout moment de l'enroulement de la bandelette 30, cette dernière passe entre les deux organes en se ménageant un passage 17 et en étant en pression entre ceux-ci et en appui contre ceux-ci. On prévoit ici que l'extrudeuse avec le nez est articulée autour d'un axe horizontal non illustré, parallèle aux axes 22 et 24, pour préserver ce passage à mesure que les tours de bandelette s'accumulent sur le tambour et augmentent le diamètre total de l'ébauche. On prévoit aussi que l'extrudeuse avec le nez est articulée autour d'un axe horizontal non illustré perpendiculaire aux axes 22 et 24 pour faciliter la mise en place de la bandelette sur l'ébauche.

Nous allons maintenant décrire la mise en oeuvre du procédé de l'invention au moyen de cette installation.

Dans le présent exemple, on extrude la bandelette 30 au moyen de l'extrudeuse 4 lors de la fabrication de l'ébauche 34. La gomme poussée par la vis 14 est donc extrudée à travers l'orifice 16 pour former une bandelette de section transversale rectangulaire. Les deux grands côtés de la section formant ses faces principales sont localement parallèles.

La bandelette 30 parcourt d'abord une partie de la face externe cylindrique 19 du rouleau 18, suivant sa direction circonférentielle, entrainée en rotation par ce dernier, ici dans le sens horaire sur les figures.

Elle arrive ensuite dans le passage 17. Elle est à ce moment en contact avec le nez 18 et en appui contre ce dernier par sa face supérieure 21 qui s'apprête à quitter le rouleau, et en appui contre le tambour 10 par sa face inférieure 23, cette dernière arrivant sur la face externe du tambour qui entraine la bandelette en rotation en aval, ici dans le sens antihoraire. La bandelette 30 s'enroule en plusieurs tours sur le tambour 10 suivant la direction circonférentielle de ce dernier autour de l'axe 24 qui correspond à l'axe 35 de l'ébauche. Au début de l'enroulement, la face inférieure 23 de la partie incidente de la bandelette vient en contact avec le tambour. Ensuite, elle vient en contact avec la face externe des tours de bandelette déjà enroulés.

Les moyens de commande 32 commandent la rotation du rouleau 18 et du tambour 10 avec des vitesses angulaires respectives telles que, au moins à certains moments de la fabrication, dans le passage 17, la vitesse linéaire Vₜ de la face inférieure 23 de la bandelette 30 (arrivant sur le tambour 10) est supérieure à la vitesse linéaire Vᵣ de sa face supérieure 21 (sortant du rouleau 18). Cette inégalité concerne les faces 21 et 23 dans une même section de la bandelette prise dans un plan perpendiculaire à son sens local de défilement. Les deux vecteurs-vitesse correspondants ont été illustrés à la figure 4. Ils sont colinéaires. Entre les deux faces, les différents niveau de la section ont des vitesses qui forment un gradient spatial entre les vitesses des deux faces.

Dans le présent exemple, c'est même à tout instant de la fabrication de l'ébauche au moyen de la bandelette que cela se produit. Il s'ensuit que la bandelette 30 se trouve en permanence étirée sur sa section entre le rouleau 18 et le tambour 10.

On effectue ici l'étirement sur la face inférieure 23 sans étirer la face supérieure 21, ce qui engendre le cisaillement de la bandelette suivant une direction parallèle à son plan local. Il s'ensuit une modification de la forme et des dimensions de cette section de la bandelette. En particulier, la superficie de cette section se réduit, et notamment son épaisseur. C'est dans cette configuration étirée que la bandelette se trouve enroulée sur le tambour 10 pour former l'ébauche 34. L'étirement de la bandelette et son enroulement sur le tambour s'effectuent alors qu'elle est encore chaude. A ce stade, la gomme présente encore une plasticité très élevée qui lui permet de supporter ce cisaillement important sans se déchirer.

Les vitesses linéaires Vᵣ et Vₜ présentent une différence constante pendant plusieurs durées non nulles. On prévoit aussi que la vitesse linéaire Vᵣ est constante pendant la durée totale de fourniture de la bandelette pour la fabrication de l'ébauche. On fait donc varier une vitesse de rotation du tambour 10 pendant plusieurs durées non nulles.

La section de la bandelette varie donc lors de son enroulement pour former l'ébauche.

Les moyens de commande 32 commandent aussi le trancanage, à savoir lors de l'enroulement le coulissement du tambour et de l'ébauche suivant l'axe 35 par rapport au nez 8, parfois en même temps qu'ils commandent la variation de vitesse de rotation.

On fait ici observer que la bandelette est à un seul brin, aucun dispositif de découpe n'étant prévu en l'espèce dans l'installation. De même, aucun organe autre que le nez et le tambour ne s'étend dans le trajet de la bandelette.

Dans le présent exemple, on distingue ainsi sur la section de l'ébauche 34 illustrée plusieurs types de section de bandelette 30 alors que la partie de l'ébauche représentée à la figure 5 a été fabriquée par un enroulement ininterrompu d'une unique bandelette 30. On voit sur la figure trois types de sections, respectivement à épaisseur fine 30a, moyenne 30b et grande 30c, ces notions étant relatives les unes aux autres. La fabrication est réalisée en commençant avec une section de bandelette fine 30a pour former une partie interne de l'ébauche. Elle se poursuit en ralentissant le tambour 10 afin d'augmenter l'épaisseur de la bandelette pour mettre en place la bandelette avec la section 30c de grande épaisseur. Ensuite, on augmente à nouveau la vitesse du tambour pour réduire l'épaisseur de la bandelette et mettre en place sur l'ébauche la section 30b à épaisseur moyenne. Puis, on achève la fabrication en augmentant encore la vitesse du tambour 10 afin de mettre en place la bandelette avec l'épaisseur fine 30a en partie externe de l'ébauche.

On observe sur la figure 5 que la bandelette est disposée en plusieurs dizaines de tours autour de l'axe 35 de l'ébauche. Dans la plupart des cas, la section courante de la bandelette recouvre partiellement au moins une section d'un tour précédent de la bandelette et se trouve elle-même recouverte par une ou plusieurs sections de tours ultérieurs de la bandelette.

Dans le présent exemple, la bandelette 30 présente en sortie de l'orifice 16 une section de 33,3 millimètres carré et une vitesse de 3,33 mètres par seconde. L'épaisseur 30a correspond à une section de bandelette de 21,2 millimètres carré pour une vitesse linéaire de la bandelette à la surface du tambour 10 de 5,22 mètres par seconde. Pour l'épaisseur moyenne 30b, ces valeurs sont respectivement de 25 millimètres carré et de 4,43 mètres par seconde. Pour la grande épaisseur 30c, ces valeurs passent à 28,7 millimètres carré et 3,87 mètres par seconde. Naturellement, plus la vitesse du tambour 10 est élevée, plus petites sont la superficie de la section de la bandelette et son épaisseur suivant la direction radiale à l'axe 24.

Le procédé de l'invention permet de respecter les diverses contraintes dimensionnelles de l'architecture du profil général de l'ébauche comme illustré à la figure 5. Ainsi, le long de l'axe 35, l'ébauche peut présenter des zones massives ou zones de remplissage 40 séparées par des zones de creux 42 .

Dans les zones massives 40 également appelées pains, on donne à au moins certaines sections de la bandelette une forte superficie. Au contraire, dans les zones de creux 42, on dispose seulement quelques épaisseurs de bandelette avec une superficie de section réduite. On utilise aussi cette épaisseur pour l'habillage extérieur de l'ensemble de l'ébauche, notamment des zones de pain 40.

La possibilité offerte par le procédé de l'invention de faire varier en cours d'enroulement la superficie de la section de la bandelette et la zone d'enroulement grâce au coulissement permet de constituer la zone de creux 42 avec seulement quelques couches de bandelette et une grande précision dimensionnelle, tandis qu'elle permet de réaliser rapidement les pains 40 grâce à la mise en place de plusieurs tours de bandelette avec une forte superficie de section.

Le procédé permet de respecter précisément les cotes de ces deux types de zones. Ainsi, la cote de sous-creux 42, mesurée suivant la direction radiale à l'axe 35, a une grande importance pour la fabrication de la bande de roulement car elle conditionne directement la position ultérieure des fils de la nappe de sommet du pneumatique après cuisson. Si cette cote n'est pas respectée, on observe un cabossage des nappes de sommet qui est préjudiciable à la durée de vie du pneumatique. De même, la hauteur des pains formés par les zones massives 40 conditionne directement la qualité du produit fini après la vulcanisation.

On peut par exemple choisir la vitesse de rotation du rouleau 18 pour que la vitesse de la bandelette à sa surface soit environ inférieure de 20 % à la vitesse de la bandelette à sa sortie de l'orifice d'extrusion.

Les organes 18 et 10 sont ici dépourvus de moyens de chauffage car il n'est pas nécessaire d'apporter de la chaleur à la bandelette durant la mise en oeuvre du procédé.

L'invention est applicable à une bandelette dont la superficie se situe par exemple entre 15 et 50 millimètres carré avec une vitesse maximale de défilement de 5 mètres par seconde pour un débit de bandelette pouvant aller jusqu'à 10 kilogrammes par minute. L'extrudeuse 4 et le nez à rouleau 8 peuvent être embarqués sur un robot à trois axes synchronisé avec le tambour 10 d'enroulement de l'ébauche.

Au cours du procédé, la forme et les dimensions de l'orifice 16 de l'extrudeuse demeurent constantes. Il s'agit d'un avantage car, à l'inverse, si l'on envisageait de réduire la section de la bandelette au niveau de l'orifice d'extrusion par modification des dimensions de ce dernier à isodébit, on générerait une augmentation du gradient de vitesse de cisaillement sur la bandelette et donc une élévation de la température du matériau extrudé, ainsi qu'une diminution du débit de l'extrudeuse. Avec l'invention, on extrude la bandelette avec une section constante de taille relativement importante, puis on l'étire plus ou moins au cours de l'opération de pose sur le sommet de l'ébauche afin d'ajuster cette section au cours de la fabrication de l'ébauche, La modification de la vitesse de rotation du tambour 10 permet de faire varier la section de la bandelette en cours d'enroulement sans interrompre la fabrication.

L'ébauche comprend donc une bandelette de gomme 30 ininterrompue, à un seul brin, enroulée sur plusieurs tours et présentant une section, dans un plan radial à l'axe 35, ayant une superficie non constante le long de la bandelette. Dans au moins deux sections de la bandelette s'étendant dans un même plan radial de l'ébauche et situées à la suite l'une de l'autre le long de la bandelette, une fibre moyenne 37 de la bandelette occupe des positions respectives différentes le long de l'axe 35.

On donne ci-après quelques informations quantitatives mettant en correspondance la section de la bandelette extrudée au niveau de l'orifice 16 en millimètres carré, le débit de la bandelette en grammes par seconde, la masse de la bande à fabriquer, le temps de pose de la bandelette sur l'ébauche en secondes, la superficie de la section posée sur le tambour en millimètres carré et enfin la vitesse de pose en mètres par seconde. Seule la dernière ligne est associée à un étirement de la bandelette.

| Section extrudée *en mm²* | Débit *en g*/*sec* | Masse de bande à fabriquer *en kg* | Temps de pose *en seconde* | Section posée sur tambour *en mm²* | Vitesse de pose *en m*/*s* |
|---|---|---|---|---|---|
| 20 | 100 | 3 | 30 | 20 | 5 |
| 40 | 150 | 3 | 20 | 40 | 3,75 |
| 40 | 150 | 3 | 20 | 20 | 7,5 |

A l'issue de la fabrication de l'ébauche, celle-ci fait l'objet des étapes habituelles de fabrication du pneumatique, notamment la vulcanisation pour la cuisson de l'ébauche.

Dans un autre mode de réalisation, on peut prévoir que, pendant toute la fabrication de l'ébauche, les vitesses de rotation du nez 18 et du tambour 10 sont constantes. Les vitesses linéaires Vᵣ et Vₜ demeurent différentes l'une de l'autre pour réaliser l'étirement de la bandelette. On constitue donc l'ébauche avec une bandelette ayant un seul type de section. A l'issue de la fabrication, pour fabriquer un autre type d'ébauche, il suffit de modifier la différence entre les vitesses de rotation. On peut par ce moyen adapter la section du ruban au type d'ébauche à fabriquer et ne pas pénaliser la productivité de la machine qui fabrique successivement ces modèles différents. On peut par exemple extruder le ruban avec une section de 33,3 mm² et réaliser des ébauches successives avec une section de ruban comprise entre 20 et 30 mm² à 3,67 m/s.

Bien qu'il soit avantageux de réaliser la bande de roulement de l'ébauche au moyen d'une unique bandelette étirée, on pourra mettre en oeuvre l'invention en utilisant successivement ou simultanément plusieurs bandelettes étirées pour une même ébauche.

On peut aussi prévoir que la bandelette ne se trouve étirée que durant une partie de l'enroulement. L'ébauche comprendra alors un ou plusieurs tours de bandelette dont la section est sensiblement identique à la section extrudée et un ou plusieurs tours de bandelette dont la section est modifiée suite à l'étirement.

On peut prévoir dans un autre mode de réalisation que le tambour 18 est éloigné du rouleau 10 de sorte que la bandelette n'est pas en contact simultané avec ces deux organes lors de son passage de l'un à l'autre. Il existe donc un tronçon longitudinal de bandelette qui est tendu entre le nez qu'il a quitté et le tambour sur lequel il n'est pas encore arrivé. Les moyens de commande 32 commandent la rotation du rouleau 18 et du tambour 10 avec des vitesses angulaires respectives telles que, au moins à certains moments de la fabrication, la vitesse linéaire Vₜ de la bandelette 30, à son arrivée sur le tambour 10, est supérieure à la vitesse linéaire Vᵣ de la bandelette à sa sortie du rouleau 18. Il s'ensuit que la bandelette 30 se trouve en permanence étirée sur toute la longueur de son tronçon situé entre la sortie du rouleau 18 et l'entrée sur le tambour 10. Cet étirement engendre une modification de la forme et des dimensions de la section de la bandelette prise dans un plan perpendiculaire à sa direction de défilement. En particulier, la superficie de cette section se réduit, et notamment son épaisseur. C'est dans cette configuration étirée que la bandelette se trouve enroulée sur le tambour 10 pour former l'ébauche 34. Cette fois, il ne se produit pas de cisaillement dans la section transversale.

Ce mode de réalisation est toutefois moins avantageux dans la mesure où la tension risque de se transmettre jusqu'à l'orifice d'extrusion, rendant ainsi difficile de respecter les caractéristiques dimensionnelles de la bandelette extrudée.

## Revendications

1. Procédé de fabrication d'une ébauche crue (34) de pneumatique de véhicule, dans lequel on extrude une bandelette de gomme (30) et on la fait passer entre deux organes (18, 10) dont l'un forme un rouleau d'extrusion de la bandelette (18), de sorte que des faces (21, 23) de la bandelette, formant une même section de la bandelette dans un plan perpendiculaire à une direction de défilement de la bandelette et en appui simultané contre les organes respectifs, sont entrainées à des vitesses linéaires (Vᵣ, Vₜ) différentes l'une de l'autre, et que les organes (18, 10) étirent la bandelette entre eux.

2. Procédé selon la revendication précédente dans lequel les faces sont entrainées aux vitesses différentes (Vᵣ, Vₜ) dans une même section de la bandelette dans un plan perpendiculaire à la direction de défilement.

3. Procédé selon au moins l'une quelconque des revendications précédentes dans lequel, pendant le passage entre les organes, on enroule la bandelette pour former l'ébauche.

4. Procédé selon au moins l'une quelconque des revendications précédentes dans lequel on effectue un trancanage.

5. Procédé selon au moins l'une quelconque des revendications précédentes dans lequel l'un des organes forme un support d'enroulement (10).

6. Procédé selon au moins l'une quelconque des revendications précédentes dans lequel, la bandelette (30) passant de l'un à l'autre des organes, une vitesse linéaire (Vᵣ) de la bandelette sur l'organe amont (18) est inférieure à une vitesse linéaire (Vₜ) de la bandelette sur l'organe aval (10), les vitesses linéaires présentant de préférence une différence constante pendant une durée non nulle.

7. Procédé selon au moins l'une quelconque des revendications précédentes dans lequel une vitesse linéaire (Vₗ) de la bandelette (30) sur l'un des deux organes, par exemple l'organe amont (18) lorsque la bandelette (30) passe de l'un à l'autre des organes, est constante pendant une durée non nulle, par exemple pendant une durée totale de fourniture de la bandelette pour la fabrication de l'ébauche.

8. Procédé selon au moins l'une quelconque des revendications précédentes dans lequel on fait varier une vitesse de rotation (Vₗ) de l'un des deux organes, par exemple l'organe aval (10) lorsque la bandelette (30) passe de l'un à l'autre des organes, pendant une durée non nulle.

9. Installation (2) de fabrication d'une ébauche crue (34) de pneumatique de véhicule, qui comprend :
- deux organes mobiles (18, 10) entre lesquels l'installation est apte à faire passer une bandelette de gomme (30), et
- des moyens automatisés (32) aptes à commander les deux organes (18, 10) de sorte que, lors du passage, des faces (21, 23) de la bandelette, formant une même section de la bandelette dans un plan perpendiculaire à une direction de défilement de la bandelette et en appui simultané contre les organes respectifs, sont entrainées à des vitesses linéaires (Vᵣ, Vₜ) différentes l'une de l'autre **caractérisé en ce que** l'un des organes forme un rouleau d'extrusion (18) de la bandelette, et les moyens automatisés sont aptes à commander les deux organes de sorte que les organes étirent la bandelette entre eux.

10. Installation selon la revendication précédente dans laquelle les organes sont dépourvus de moyens de chauffage.

11. Ébauche crue (34) de pneumatique de véhicule, qui comprend une bandelette de gomme ininterrompue (30), à un seul brin, enroulée sur plusieurs tours **caractérisée en ce que** la bandelette présente une section, dans un plan radial à un axe principal (35) de l'ébauche, ayant une superficie non constante le long de la bandelette et telle que, dans au moins deux sections de la bandelette s'étendant dans un même plan radial de l'ébauche et situées à la suite l'une de l'autre le long de la bandelette, une fibre moyenne (37) de la bandelette occupe des positions respectives différentes le long de l'axe.

## Patentansprüche

1. Verfahren zur Herstellung eines Rohlings (34) eines Reifens eines Fahrzeugs, bei welchem ein Gummiband (30) extrudiert wird und es zwischen zwei Organen (18, 10) hindurch geführt wird, von denen das eine eine Rolle zur Extrusion des Bands (18) bildet, derart dass Seitenflächen (21, 23) des Bands, welche einen gleichen Abschnitt des Bands in einer zu einer Durchziehrichtung des Bands senkrechten Ebene bilden und gleichzeitig an den jeweiligen Organen anliegen, mit zueinander unterschiedlichen linearen Geschwindigkeiten (Vᵣ, Vₗ) angetrieben werden, und dass die Organe (18, 10) das Band zwischen sich recken.

2. Verfahren nach dem vorhergehenden Anspruch, bei welchem die Seitenflächen in einem gleichen Abschnitt des Bands in einer zur Durchziehrichtung senkrechten Ebene mit verschiedenen Geschwindigkeiten (Vᵣ, Vₗ) angetrieben werden.

3. Verfahren nach mindestens einem der vorhergehenden Ansprüche, bei welchem das Band während des Durchlaufs zwischen den Organen aufgerollt wird, um den Rohling zu bilden.

4. Verfahren nach einem der vorhergehenden Ansprüche, bei welchem ein Aufwickeln durchgeführt wird.

5. Verfahren nach mindestens einem der vorhergehenden Ansprüche, bei welchem das eine der Organe einen Wicklungsträger (10) bildet.

6. Verfahren nach einem der vorhergehenden Ansprüche, bei welchem, während das Band (30) von dem einen zu dem anderen der Organe gelangt, eine lineare Geschwindigkeit (Vᵣ) des Bands am stromaufwärts gelegenen Organ (18) kleiner ist als eine lineare Geschwindigkeit (Vₗ) des Bands am stromabwärts gelegenen Organ (10), wobei die linearen Geschwindigkeiten vorzugsweise eine konstante Differenz während einer ungeölten Dauer aufweisen.

7. Verfahren nach mindestens einem der vorhergehenden Ansprüche, bei welchem eine lineare Geschwindigkeit (Vₗ) des Bands (30) an einem der beiden Organe, zum Beispiel dem stromaufwärts gelegenen Organ (18), wenn das Band (30) von dem einen zu dem anderen der Organe gelangt, während einer Dauer von nicht Null, zum Beispiel während einer gesamten Dauer zur Bereitstellung des Bands für die Herstellung des Rohlings, konstant ist.

8. Verfahren nach mindestens einem der vorhergehenden Ansprüche, bei welchem eine Drehgeschwindigkeit (Vₗ) eines der beiden Organe, zum Beispiel des stromabwärts gelegenen Organs (10), wenn das Band (30) von dem einen zu dem anderen der Organe gelangt, während einer Dauer von nicht Null variiert wird.

9. Einrichtung (2) zur Herstellung eines Rohlings (34) eines Reifens eines Fahrzeugs, welche aufweist:
- zwei bewegliche Organe (18, 10), zwischen welchen die Einrichtung ein Gummiband (30) durchlaufen lassen kann, und
- automatisierte Mittel (32), welche geeignet sind, die beiden Organe (18, 10) zu steuern, derart dass Seitenflächen (21, 23) des Bands, welche einen gleichen Abschnitt des Bands in einer zu einer Durchziehrichtung des Bands senkrechten Ebene bilden und gleichzeitig an den jeweiligen Organen anliegen, mit zueinander unterschiedlichen linearen Geschwindigkeiten (Vᵣ, Vₗ) angetrieben werden, **dadurch gekennzeichnet, dass** das eine der Organe eine Rolle zur Extrusion des Bands (18) bildet und die automatisierten Mittel geeignet sind, die beiden Organe derart zu steuern, dass die Organe das Band zwischen sich recken.

10. Einrichtung nach dem vorhergehenden Anspruch, bei welcher die Organe frei von Heizmitteln sind.

11. Rohling (34) eines Reifens eines Fahrzeugs, welcher ein ununterbrochenes Gummiband (30) mit einem einzelnen Strang aufweist, welches mit mehreren Windungen aufgewickelt wird, **dadurch gekennzeichnet, dass** das Band einen Abschnitt in einer Ebene radial zur Hauptachse (35) des Rohlings aufweist, welcher eine nicht konstante Oberfläche entlang des Bands und derartig aufweist, dass in mindestens zwei Abschnitten, welche sich in einer gleichen radialen Ebene des Rohlings erstrecken und entlang des Bands aufeinander folgend angeordnet sind, eine mittlere Faser (37) des Bands entlang der Achse jeweilige verschiedene Positionen einnimmt.

## Claims

1. Method for manufacturing an uncured blank (34) of a vehicle tyre, wherein a strip (30) of rubber is extruded and is made to pass between two members (18, 10), one of which forms a roller (18) for extruding the strip, such that the faces (21, 23) of the strip, forming one and the same section of the strip in a plane perpendicular to a direction of travel of the strip and pressing simultaneously against the respective members, are driven at linear speeds (Vᵣ, Vₜ) that differ from one another, and that the members (18, 10) stretch the strip between them.

2. Method according to the preceding claim, in which the faces are driven at different speeds (Vᵣ, Vₜ) in one and the same section of the strip in a plane perpendicular to the direction of travel.

3. Method according to at least either one of the preceding claims, in which, as it passes between the members, the strip is wound to form the blank.

4. Method according to at least any one of the preceding claims, in which traverse winding is carried out.

5. Method according to at least any one of the preceding claims, in which one of the members forms a winding support (10).

6. Method according to at least any one of the preceding claims, in which, with the strip (30) passing from one of the members to the other, a linear speed (Vᵣ) of the strip over the upstream member (18) is lower than a linear speed (Vₜ) of the strip over the downstream member (10), the linear speeds preferably having a constant difference for a non-zero period.

7. Method according to at least any one of the preceding claims, in which a linear speed (Vₜ) of the strip (30) over one of the two members, for example the upstream member (18) when the strip (30) passes from one of the members to the other, is constant for a non-zero period, for example for a total period of supply of the strip for the manufacture of the blank.

8. Method according to at least any one of the preceding claims, in which a rotation speed (Vₜ) of one of the two members, for example the downstream member (10) when the strip (30) passes from one of the members to the other, is varied for a non-zero period.

9. Installation (2) for manufacturing an uncured blank (34) of a vehicle tyre, which comprises:
- two movable members (18, 10), between which the installation is capable of causing a strip of rubber (30) to pass, and
- automated means (32) capable of controlling the two members (18, 10) such that, during the passage, faces (21, 23) of the strip, forming one and the same section of the strip in a plane perpendicular to a direction of travel of the strip and pressing simultaneously against the respective members, are driven at linear speeds (Vᵣ, Vₜ) that differ from one another,
**characterized in that** one of the members forms a roller (18) for extruding the strip, and the automated means are capable of controlling the two members such that the members stretch the strip between them.

10. Installation according to the preceding claim, in which the members have no heating means.

11. Uncured blank (34) of a vehicle tyre, which comprises an uninterrupted strip of rubber (30), in a single strand, wound over several turns, **characterized in that** the strip has a section, in a radial plane with respect to a main axis (35) of the blank, that has a non-constant surface area along the strip and such that, in at least two sections of the strip extending in one and the same radial plane of the blank and situated following one another along the strip, a medium fibre (37) of the strip occupies different respective positions along the axis.
